# EUROPEAN PATENT APPLICATION

(11) **EP 4 726 677 A1**
(43) Date of publication of application: **15.04.2026**
(21) Application number: 25275100.3
(22) Date of filing: 13.10.2025
(51) Int. Cl.: G06V 20/58

(54) **HAZARDOUS OBJECT DETECTION**

(30) Priority: 14.10.2024 GB 202415066
(71) Applicant: Roadside Technologies Ltd, Staveley, Chesterfield S43 3LJ (GB)
(72) Inventor: Bray, Gary, Chesterfield S43 3LJ (GB); Moseley, Chris, Chesterfield S43 3LJ (GB); Brownhill, James, Chesterfield S43 3LJ (GB)
(74) Representative: Dehns

(57) **Abstract**

A system (100) for detecting the presence of a hazardous object on a road. The system includes a detection and ranging sensor (110), an image capture device (120) and a processing module (130). The detector and ranging sensor is used to capture data from the road and generate a three-dimensional point cloud based on the captured data. The image capture device captures visual data from the road. The processing module generates an identification of at least one hazardous object within the three-dimensional point cloud, where the identification includes a subset of points within the three-dimensional point cloud, and maps the subset of points in the three-dimensional point cloud to corresponding parts of the visual data.

## Description

### BACKGROUND OF THE INVENTION

This invention relates to the detection of hazardous objects, such as stopped vehicles and fallen debris, on roads.

Roadworks carried out on highways typically use barriers and traffic management signs to mark out and guide drivers safely through work zones which typically have a reduced capacity and narrower lanes which makes the presence of hazardous objects more dangerous. Real-time monitoring of such zones for hazardous objects is critical to ensuring the safety of both workers and drivers, especially whilst construction is ongoing. For example, when highway lanes are narrowed or closed due to roadworks, variable message signs can be used to convey dynamic information to drivers (such as congestion or obstacle alerts) to prevent collisions between stationary and moving objects.

Existing technologies monitor work zones using cameras and/or conventional radar sensors installed at the roadside. An operator is employed to monitor and manually direct a camera to identify or verify the presence of any hazardous objects. These methods are reliant on manual operators for detecting hazards, which can lead to delays in responding to incidents.

Cameras and conventional radar sensors are also subject to reduced accuracy under certain environmental conditions. For example, cameras may perform poorly in low lighting, adverse weather or over long ranges, whilst conventional radar sensors may perform poorly in adverse weather and struggle to identify small objects reliably.

### SUMMARY OF THE INVENTION

From a first aspect, the invention provides a system for detecting the presence of a hazardous object on a road, the system comprising:
a detection and ranging sensor, arranged to capture data from the road and generate a three-dimensional point cloud, based on the captured data;
an image capture device arranged to capture visual data from the road;
a processing module configured to:
   generate an identification of at least one hazardous object within the three-dimensional point cloud, the identification comprising a subset of points within the three-dimensional point cloud; and
   map the subset of points in the three-dimensional point cloud to corresponding parts of the visual data.

From a second aspect, the invention provides a method for detecting the presence of a hazardous object on a road, the method comprising:
capturing data from the road;
generating a three-dimensional point cloud, based on the captured data;
capturing visual data from the road;
generating an identification of at least one hazardous object within the three-dimensional point cloud, the identification comprising a subset of points within the three-dimensional point cloud; and
mapping the subset of points in the three-dimensional point cloud to corresponding parts of the visual data.

Thus it will be seen that, in accordance with at least the embodiments of the invention, both point cloud data and visual data are combined to allow a detected hazardous object to be easily and quickly identified. This may facilitate automation of the verification process for detected hazardous objects. For example, a human operator monitoring a display output which presents the visual data may have their attention automatically directed to the detected hazardous object, which helps to ensure that suitable action is taken sooner. Therefore, the present invention may allow for faster and more accurate verification of the presence of hazardous objects on a road, since the verification process is partly automated.

The hazardous object may be any stationary or slow-moving object on the road which blocks the road or poses a risk of collision by other vehicles. For example, the hazardous object may include stopped or stationary vehicles, pedestrians, animals, or obstacles such as fallen debris, tyres and construction materials.

Providing a system which is able to detect a range of hazardous objects, especially slow-moving objects and smaller objects, may enable important contextual information to be gathered. For example, a slow-moving vehicle may pose as much risk to other motorists on a highway as a stationary vehicle. Similarly, a small object such as a tyre, carcass or a displaced traffic cone can be dangerous as it cannot be easily seen by oncoming drivers but can still cause an accident if struck. Embodiments of the present invention may be arranged to detect objects with a size of 500 mm³ or larger. Thus, a more accurate and contextualised view of the road scene may be captured, which helps to mitigate traffic congestion and improve safety.

As will be appreciated by those skilled in the art, detection and ranging sensors (hereinafter "ranging sensors") typically transmit a series of signals which sweep across a field of view, the signals being reflected from the scene and their time of flight measured so as to measure distances to the reflection point in order to create a three-dimensional point cloud of their field of view. When a ranging sensor is directed to monitor a road therefore, the three-dimensional point cloud maps the road scene. The road scene may include road infrastructure, vehicles and any hazardous objects. Each point in the point cloud directly corresponds to a position with a three-dimensional coordinate in the road scene, rather than an estimated or calculated position in the road scene. In contrast, distances to an object which are determined using passive visual data, e.g. triangulation using data from a camera, may be less accurate and highly dependent on lighting and environmental conditions.

The signals used by the ranging sensor could take a number of forms. For example, it is envisaged that ultrasound or specialist radar signals could be employed. In a set of embodiments however the signals are pulses of laser light - i.e. the sensor is a light detection and ranging (LiDAR) sensor. The use of LiDAR sensors may ensure high precision of captured data and provide a higher spatial resolution than options such as conventional radar sensors. This high precision and spatial resolution are not compromised over long ranges, adverse weather conditions (e.g. rain, snow) or in low lighting. Additionally, LiDAR sensors fare particularly well at detecting small objects, which may be especially useful for identifying smaller hazardous objects such as traffic cones.

In a set of embodiments, the LiDAR sensor is mounted to a support structure at the roadside and captures data by rotating about its axis - preferably at an angle of between 15 and 20 degrees - e.g. 18 degrees - below the horizontal. The Applicant has appreciated that since the LiDAR sensor's vertical field of view is limited, careful alignment is necessary to ensure sufficient coverage of the road scene. By setting the angle of the LiDAR sensor to be about 18 degrees, it has been found that in some circumstances the dead zone underneath the sensor can be minimised. However, this is not essential and in other circumstance, different orientations may be more suitable.

The identification of the hazardous object within the three-dimensional point cloud may be performed by executing software code, of a type known *per se,* on the processing module. The software code performs a set of instructions in order to interpret the three-dimensional point cloud and subsequently to identify hazardous objects. The software code may implement computer vision techniques to perform pre-processing of the data and/or pattern recognition. For example, hazardous objects may be identified by determining, for a point or collection of points, relevant information such as a distance to the ranging sensor, a speed or a size.

The identification may comprise co-ordinate information of each point forming the identified hazardous object. For example, the co-ordinate information may comprise X, Y and Z position values which represent each point in the three-dimensional space of the road scene. The identification may be unique for each hazardous object.

Once a subset of points in the point cloud has been identified as corresponding to a hazardous object, in accordance with the invention this is mapped to the visual data from the image capture device. Mapping the identification of the hazardous object may comprise at least one of associating, matching, correlating and aligning the position values (e.g. X, Y, Z position values) of each point with the corresponding parts (e.g. pixels) of the visual data. The corresponding pixels may provide a visual representation of the hazardous object in the visual data, and may comprise all the pixels associated with the hazardous object or a subset thereof, e.g. an outline of the hazardous object.

It will be appreciated therefore that in accordance with the invention, parts of a visual image associated with the hazardous object are identified. This can be used in a number of different ways in order to enhance the efficiency with which, for example, the identification can be verified and/or remedial action taken. In a set of embodiments, the processing module displays the corresponding pixels as a visual highlight representing the hazardous object. An operator monitoring a display output which presents the visual data may thus have their attention automatically directed to the detected hazardous object via a visual highlight. The visual highlight may comprise any suitable method for providing a visual distinction or emphasis to the hazardous object relative to the background. For example, the visual highlight may comprise altering the pixels representing the hazardous object, e.g. to outline the hazardous object with a border (which may be brightly coloured or flashing), or to increase the contrast, saturation and/or brightness of the pixels corresponding to the hazardous object.

The processing module may provide a visual highlight of the hazardous object by altering the background pixels - that is, the pixels which do not correspond to the hazardous object. For example, the processing module may blur the background, decrease the contrast, saturation and/or brightness of the background pixels or mask the background e.g. using a vignette effect.

In an overlapping set of embodiments, mapping the subset of points to the visual data comprises selecting a portion of visual data to be displayed to the operator. For example, this could comprise zooming in on the identified parts of the image or selecting the feed from a particular camera to display on a screen.

Additionally or alternatively the identification of the subset of points may be used to control the image capture device to alter the visual data captured. In a set of embodiments therefore, the processing module causes adjustment to the field of view of the image capture device to ensure that it captures, or captures more comprehensively, visual data associated with the identified hazardous object. Once the hazardous object has been identified in the three-dimensional point cloud data, the processing module may thus determine the adjustment required to the field of view of the image capture device (e.g. a pan, tilt or zoom). For example, the processing module may interpret the position co-ordinates of the subset of points representing the hazardous object, and determine whether these position co-ordinates fall within the field of view of the image capture device. **If** the position co-ordinates of the subset of points representing the hazardous object do not (or do not fully) fall within the within the field of view of the image capture device, the processing module may calculate how much (e.g. the magnitude of the tilt angle or the panning distance) to adjust the image capture device such that its field of view contains the position co-ordinates of the subset of points representing the hazardous object.

Thus, the system may provide improved visual clarity by focusing the attention of an operator monitoring the visual data to the hazardous object. This may improve response times by reducing or eliminating background noise, allow the operator to monitor more display outputs simultaneously, and reduce human error.

**In** a set of embodiments, the system additionally displays data obtained from an external source such as a mapping database. For example, the identification of the hazardous object may be mapped onto a specific geographic location. In this way, the operator may be provided with additional contextual information and/or a different perspective of the road scene.

In a set of embodiments, the processing module generates an alert when a hazardous object is identified. For example, the alert may be an auditory alert (e.g. a sound alarm or spoken instructions), a tactile alert (e.g. a vibration to a pager, mobile phone or wearable device) or a textual alert (e.g. an email or a pop-up notification on a control screen or mobile phone app). In this way, range of alert options may be provided via multiple sensory channels, which enhances hazard awareness and improves the reliability of the alerts. The alert(s) may be designed for an operator who is monitoring the visual data.

Additionally or alternatively however, the processing module generates an external alert signal for communication to an external system. The external alert signal may thus be used to notify on-site workers, recovery teams and/or emergency services. The format of the alert generated from the signal could then be adaptable to different environmental conditions or user needs, such as loud environments or users who do not have instant access to a monitoring screen.

The external alert signal may only be generated if a human operator verifies, via the display or a description of a visual highlight, the hazardous object as causing an incident on the road. Alternatively, the external alert signal may be generated automatically. This may advantageously mean that the external alert signal is received, and can be acted upon, more quickly.

In a set of embodiments, in order to identify hazardous objects the processing module first identifies all objects within the three-dimensional point cloud. The processing module may generate a unique identification for each of the objects within the three-dimensional point cloud, which may comprise co-ordinate information (e.g. X, Y, Z position values) of each point forming the object and a unique label for the object.

When identifying objects, the software code executed on the processing module may retain all points in the generated point cloud, instead of removing or filtering out points to reduce noise. The software code may therefore interpret and contextualise noise and data artefacts over space and time, rather than adjusting to any one specific condition, sensor placement or point density. This may maximise object recall and retain contextual information for resolving ambiguities, such as static parts of the road scene and any noise or incorrect measurements arising from sensor vibrations, reflections, dirt, rain or snow. For example, the software code may be capable of distinguishing between non-hazardous static objects (e.g. fences) and non-hazardous moving objects (e.g. moving trees due to the wind).

Identification of objects could be a single event. However, in a set of embodiments, the processing module tracks objects within the three-dimensional point cloud, using the unique identifications. The generated identification of each object may be used to provide continuous tracking of the object's motion (e.g. object position and speed). In a set of embodiments this motion tracking is used to identify hazardous objects - e.g. objects which do not move when others around them do or objects which suddenly come to a stop. The processing module may track all objects over time, including those which are temporarily occluded e.g. due to a limited line of sight or adverse environmental conditions.

Tracking detected objects by assigning unique identifications thus enables hazardous objects to be identified from all tracked objects. Tracking all detected objects may enable the system to carry out lane discrimination, in that the processing module may be able to distinguish between different lanes of traffic, for example to quickly identify where a hazardous object may be stopped. This may allow for appropriate action to be taken, such as sending a signal to a control centre to close a lane on the highway.

The processing module could simply identify all objects from the point cloud data. In a set of embodiments however it further classifies all identified objects. The processing module may also classify all tracked objects based on their motion. This could be by object type (e.g. vehicle, person, object) and/or the degree of risk it poses - which might also take into account one or more of its size, motion, location, etc. This may enable hazardous objects to be identified from all identified objects within the three-dimensional point cloud. For example, an object which is identified as being more likely to result in a collision incident, e.g. a broken-down vehicle or a stationary vehicle blocking a highway lane, may be designated as a hazardous object and optionally assigned a high priority classification.

The classification (e.g. priority) of each object may be displayed on the visual highlight, such as by using a specific colour to outline a high priority hazardous object. This may allow for timely and accurate further action to be taken.

The image capture device may be any device which captures visual data in the form of images or videos, such as a camera. For example, the camera may be a closed-circuit television (CCTV) camera such as a pan-tilt-zoom CCTV camera. The image capture device may be arranged to rotate, pan and/or tilt about a fixed position, e.g. in order to capture a full view of the road scene.

The processing module may be arranged to receive the three-dimensional point cloud data from the ranging sensor via a communication link. The processing module may be arranged to receive the visual data from the image capture device via a communication link which may be the same or different. The communication link(s) may be wired or wireless, and may support one-way or two-way communication. The communication link(s) could include any number of different legs which may be of different form - e.g. involving different data networks.

The processing module may be provided proximate to the ranging sensor and/or image capture device. For example, the processing module may be positioned within the same housing as the ranging sensor and/or image capture device, or may be attached to the same housing or support structure as the ranging sensor and/or image capture device. The processing module may equally however be distributed and/or implemented remotely, such as in a remote data processing centre, in an external computer or as a cloud service.

**In** a set of embodiments, the processing module sends an instruction to a variable message sign (VMS) to alert drivers on the road. The VMS may display a warning or information message following detection of a hazardous object. The VMS may be any of virtual, mobile and placed on or near a road.

The ranging sensor and image capture device both capture data from the road. The field of view of the ranging sensor and the field of view of the image capture device may cover substantially the same portions of the road, but do not necessarily have to share the same field of view entirely. The ranging sensor and the image capture device may both be mounted to the same housing or support structure, e.g. a mast or pole, so as to have a similar view of the road. For example, the ranging sensor and the image capture device may be mounted at the same elevation on the same pole so as to capture substantially the same road scene.

In a set of embodiments, the ranging sensor and image capture device are positioned within or adjacent to a highway work zone. This reflects the advantageous use case identified by the Applicant. However, this is not essential and the invention could be used to monitor any type of road.

In a set of embodiments, the system includes an air quality sensor that detects and measures pollutant levels in the surrounding environment. The air quality sensor may collect data by measuring the concentration of exhaust gases in the air which are produced from the combustion of fuels in vehicles, such as nitric oxide, nitrogen dioxide and carbon dioxide.

In a set of embodiments, the system includes a weather sensor that measures the atmospheric conditions of the surrounding environment. For example, the weather sensor may collect data by measure wind speed, air temperature, air humidity and/or air pressure.

The data collected by the air quality sensor and/or the weather sensor may be used to provide contextual information about the environment to the processing module. The processing module may process this contextual information in order to interpret the three-dimensional point cloud data and identify objects more accurately.

Elements of the system which are at the roadside may be connected to and powered directly from a permanently installed electrical grid. However, in a set of embodiments, the elements of the system which are at the roadside are powered independently of an electrical grid. The system may therefore include a rechargeable battery and an off-grid power source, such as a solar panel or a wind turbine.

In a set of embodiments, the system comprises a roadside station. The station may include a mounting pole onto which the LiDAR sensor and the image capture device are mounted, a base and, optionally, a housing which accommodates and control or communication electronics which could include the processing module or a part thereof.

Although the system may comprise a single ranging sensor and image capture device, in a set of embodiments it comprises a plurality of one or both of these. Additional ranging sensors and image capture devices could be provided solely at the same location - e.g. directed at different parts of the road - but in a set of embodiments, an additional ranging sensor and/or image capture device is provided at a different location. For example, the system could comprise multiple stations as set out above. Each of the multiple stations may include the mounting pole, base and housing as described above. Each station may include a ranging sensor and/or an image capture device, such that there may be any combination of ranging sensors and image capture devices between the multiple stations. For example, there may be multiple ranging sensors and a single image capture device, or a single ranging sensor and multiple image capture devices. If not implemented remotely, the processing module may be located in the housing of a single one of the multiple stations, or the processing module may be distributed across more than one of the multiple stations.

Where multiple stations are provided at different locations, they could cooperate. Such cooperation could comprise sharing point cloud data between them so that a plurality of ranging sensors contribute to the point cloud. This may enhance the accuracy of hazardous object identification as different perspectives can be provided.. In a set of embodiments however they operate independently of each other. They could, for example, individually identify hazardous objects within their respective fields of view and pass these identifications to a central processor.

In a set of such embodiments the system comprises a plurality of stations arranged in a network. In a set of such embodiments the network comprises a master station and at least one node station.

In a set of such embodiments, the or each node station includes a node processing module and a node communication module, and the master includes a master processing module, a master communication module.

According to a first set of such embodiments, the or each node processing module generates an identification of the at least one hazardous object within the three-dimensional point cloud. The master processing module may then correlate the identifications with each other or with its own. The mapping to visual data could be carried out by the master processing module or by a remote processing module.

The master processing module may receive the data from the node communication module(s) and execute software code which combines and integrates the received data from the or each of the node stations to create a continuous, single instance view of the road scene which is covered by the network. The master processing module may accurately combine the received data by synchronising timestamp data and/or aligning position coordinates for common reference points, between the sets of data captured at the or each node station.

The master processing module may instruct the master communication module to send data to a monitoring station for display on a display output, which may be monitored by an operator located in the monitoring station. The data sent from the master communication module to the monitoring station may include a list of unique identifications (e.g. three-dimensional position co-ordinates) corresponding to a subset of points within the point cloud associated with each hazardous object, and/or a list of corresponding parts of (e.g. pixels in) the visual data.

The node communication module(s) may establish a point-to-point wireless link with an adjacent node station and/or the master station, and the master communication module may act as a router.

The communication modules may thus communicationally link the or each node station with an adjacent node station, or with the master station. The communication modules may also communicationally link the node station(s) and/or the master station with a monitoring station. The master station may be communicationally linked with an alarm receiving centre via the master communication module.

The communicational links may be established wirelessly, for example using radio communication via Wi-Fi or a 4G/5G mobile data network. The communicational links may be wired, for example using underground or overhead cables.

Data from a node communication module may be sent to the master communication module via a sequential connection through one or more intermediate node communication modules. For example, the node communication module may send data to the master communication module via a 'daisy-chain' configuration.

In a potential alternative set of such embodiments, the node processing modules merely process the raw point cloud data for communication to the master processing module. The node processing modules do not generate identifications of hazardous objects. The master processing module may combine the raw point cloud data from the or each of the node processing modules with its own and/or each other. The master processing module itself generates the identification of hazardous objects or may communicate the combined data to a remote server for this purpose.

With either approach, by combining the point cloud data and/or data relating to the identified hazardous objects, a unified, holistic view of the road scene can be provided. Hardware use across the network can also be optimised.

By integrating a range of sensor coverage areas, each object within the coverage area of one sensor's field of view can be identified in and matched to another sensor's field of view to provide 'object fusion' across the plurality of stations arranged in the network.

The network may thus allow for continuous detection, classification and/or tracking objects over time which are significantly or partially occluded due to a limited line of sight or adverse environmental conditions. For example, a vehicle may be partially or entirely occluded whilst travelling behind a pillar. The master processing module may estimate the trajectory of an object using object speed measurements and use this to match an identified object in order to track an object passing through an occlusion zone.

Thus, a comprehensive view of the road scene can be ensured and continuity can be provided for object tracking over time.

Features of any aspect or embodiment described herein may, wherever appropriate, be applied to any other aspect or embodiment described herein. Where reference is made to different embodiments or sets of embodiments, it should be understood that these are not necessarily distinct but may overlap.

### BRIEF DESCRIPTION OF THE DRAWINGS

Certain preferred embodiments of the invention will now be described, by way of example only, with reference to the accompanying drawings, in which:
Figure 1 is a perspective view of a tower station in accordance with an embodiment of the invention;
Figure 2 is a block diagram of the tower station of Figure 1;
Figure 3 is an enlarged view of the tower station of Figure 1, showing a side elevation of the LiDAR sensor;
Figure 4A is a conventional image of a section of a road, captured using a camera;
Figure 4B is a representation of the same section of the road as in Figure 4a, captured using a LiDAR sensor;
Figure 5A shows point cloud data of a different section of the road, captured using a LiDAR sensor;
Figure 5B shows the same section of the road as in Figure 5a, with identified objects shown in bounding boxes;
Figure 5C shows a hazardous object being displayed and highlighted on a screen;
Figure 6A is a schematic diagram of a network of multiple tower stations in accordance with a second embodiment of the invention;
Figure 6B is a schematic diagram of a network of multiple tower stations in accordance with a third embodiment; and
Figure 7 is a flow diagram of a method in accordance with the invention for detecting the presence of a hazardous object on a road.

### DETAILED DESCRIPTION

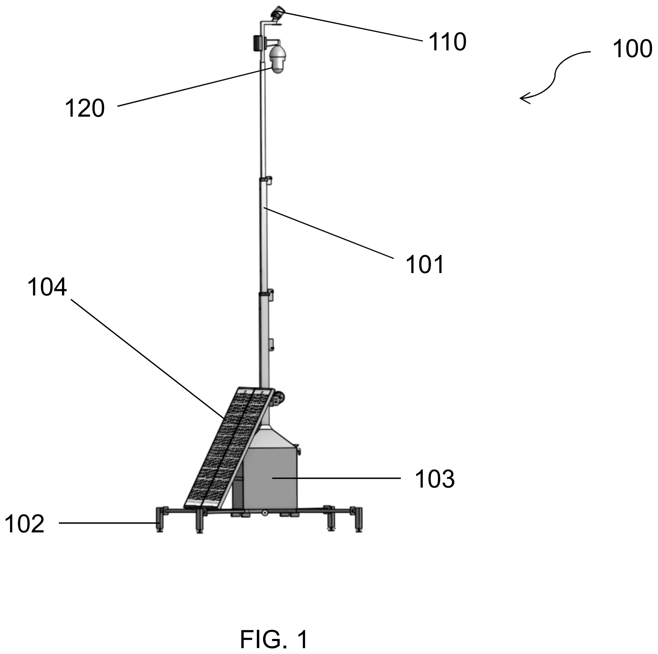

Figure 1 is a perspective view of a tower station 100 for capturing data from a road.

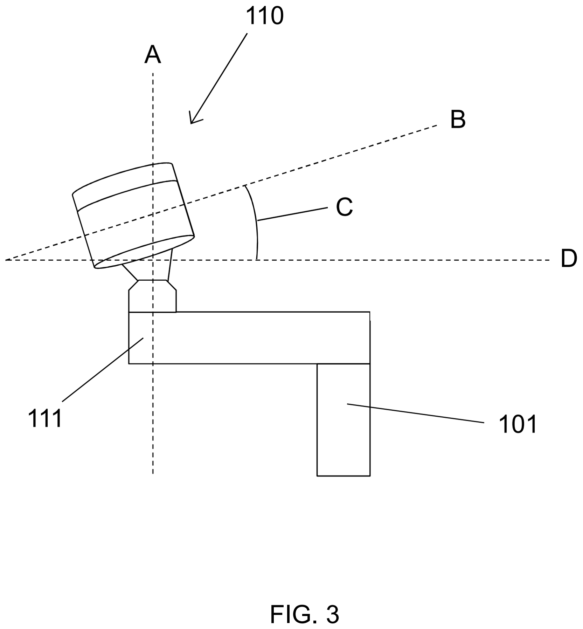

The tower station 100 includes a telescopic pole 101, a base 102 and a housing 103. The tower station 100 also includes a ranging sensor in the form of a LiDAR sensor 110 and an image capture device in the form of a CCTV camera 120, which are both mounted to the telescopic pole 101 at approximately the same pre-determined elevation above the ground (corresponding to maximum extension of the telescopic pole 101). The CCTV camera 120 is a pan-tilt-zoom CCTV (PTZ-CCTV) camera which is able to pan to, tilt to and zoom in on specific areas of interest within the road scene. The CCTV camera 120 may be capable of up to at least 32x optical zoom. The LiDAR sensor 110 is described in more detail with reference to Figure 3 below.

The pre-determined elevation is calculated to minimise obscuration and provide a complete view of the road scene, whilst maintaining a suitable range to capture data accurately. For example, the elevation may be approximately six metres above the ground. The tower station 100 has a base width which is sufficient to provide stability. For example, the base width may be three metres.

The telescopic pole 101 engages with the base 102, for example via insertion into a receiving aperture or socket located at the centre of the base. The base 102 consists of four legs which each extend radially outwardly from, and are distributed evenly about, the centre of the base. This balanced configuration allows the weight of the tower station 100 to be distributed across a greater area and improves stability.

The housing 103 is a sealed box which is centred about and encloses the telescopic pole 101 at the end proximate to the base 102, such that the housing 103 is supported on the base 102.

The tower station 100 also includes a solar panel 104 which is mounted to the base 102 and the telescopic pole 101.

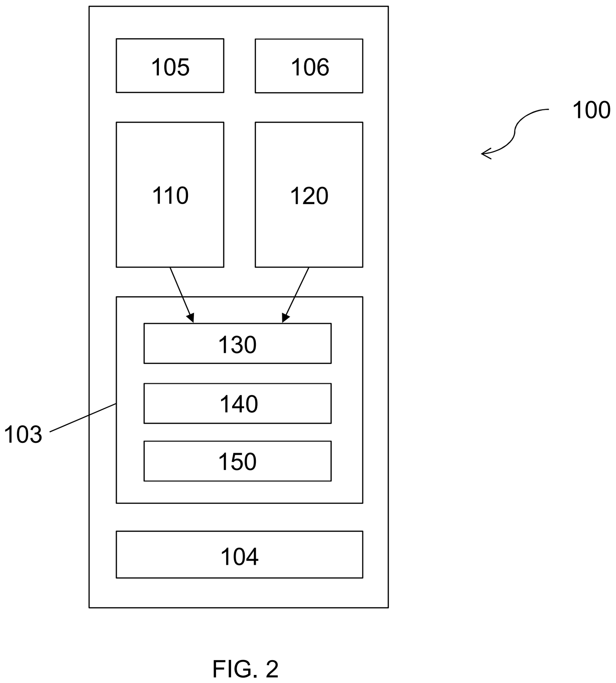

Figure 2 is a schematic block diagram of the tower station 100, additionally showing an air quality sensor 105, a weather sensor 106 and the components contained within the housing 103.

The air quality sensor 105 detects and measures pollutant levels in the environment surrounding the tower station 100. For example, the air quality sensor 105 measures the concentration of nitric oxide, nitrogen dioxide and carbon dioxide in the air.

The weather sensor 106 measures the atmospheric conditions of the environment surrounding the tower station 100. For example, the weather sensor 106 measures the temperature, humidity and pressure of the air, as well as wind speeds.

The housing 103 accommodates a processing module 130, a communication module 140 and a rechargeable battery 150. It will be appreciated that the housing 103 may also accommodate any suitable combination of electrical equipment such as electrical wiring, a power management unit or a data storage module.

The processing module 130 includes a computer which is able to store and execute software code. The software code may be any suitable commercial off-the-shelf product, such as software developed by Flasheye, Outsight or Seoul Robotics. The processing module 130 has a wired communication link with the LiDAR sensor 110 and the CCTV camera 120. It processes the data received from the LiDAR sensor 110 and the CCTV camera 120 and transmits the result via the communication module to a remote monitoring station.

The communication module 140 includes a transmitter and a receiver, which may be integrated into a single transceiver unit. The transmitter allows communication with the remote monitoring station. The communication module 140 may also enable point-to-point communication between the tower station 100 and a communication module of a different tower station.

The rechargeable battery 150 receives power from the solar panel 104 such that the tower station 100 can operate independently of the electrical grid. It will be appreciated that the rechargeable battery 150 may be able to receive power from any other suitable off-grid power sources, such as a wind turbine.

Figure 3 is an enlarged side elevation view of the LiDAR sensor **110** mounted on the telescopic pole 101 of Figure 1. The LiDAR sensor **110** is affixed to a rigid mounting bracket **111** that extends outwardly in a direction perpendicular to the longitudinal axis of the telescopic pole 101.

The vertical axis A of the LiDAR sensor **110** extends parallel to the longitudinal axis of the telescopic pole 101. The optical axis B of the LiDAR sensor **110** extends at an angle C above a horizontal axis D which extends parallel to the extension of the rigid mounting bracket 111.

The LiDAR sensor **110** is able to rotate at a fixed frequency about its vertical axis A in order to capture a 360-degree view of its environment. For example, the LiDAR sensor 110 rotates at a configurable frequency, initially set to 10 Hz.

Owing to a limited vertical field of view, the LiDAR sensor 110 is mounted at an angle C relative to the horizontal axis D such that its optical system is longitudinally aligned with the optical axis B. The angle C is predetermined in order to minimise the dead zone underneath the sensor and to ensure sufficient coverage of the road scene. For example, the angle C may be 18 degrees.

The LiDAR sensor 110 is a multi-channel LiDAR sensor which employs multiple laser beams to simultaneously gather data points. For example, the LiDAR sensor has 128 channels of light which are distributed about the optical axis B between +15.0 degrees (above) and -24.8 degrees (below), providing a vertical field of view of about 40 degrees. The distribution of the channels of light increases in density towards 0 degrees, which is aligned directly along the optical axis B.

The LiDAR sensor 110 is configured to remove data points captured in its horizontal field of view which correspond to information not relating to the road scene. The horizontal field of view extends along the plane formed by rotating the optical axis B though an angle which ensures the road is visible. For example, data captured between 90 degrees and 180 degrees behind the horizontal field of view may be removed before the data is processed.

The LiDAR sensor 110 has a range suitable for accurately detecting objects on the road. For example, the LiDAR sensor 110 has a maximum range of 230 metres.

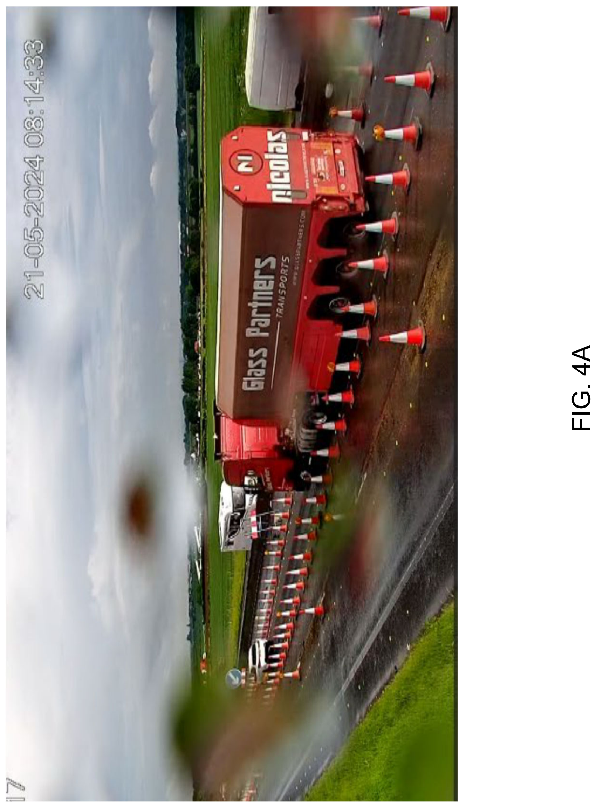

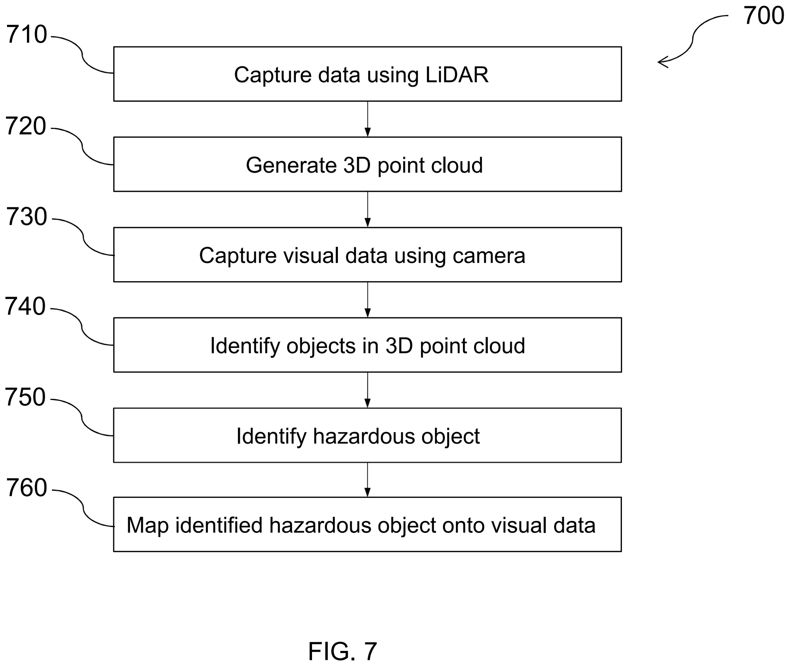

Operation of the system illustrated in Figures 1 to 3 will now be described with further reference to Figures 4A, 4B, 5A, 5B and 7.

The tower station 100 is positioned at the roadside, for example three metres behind a safety barrier at the boundary of a road. The LiDAR sensor 110 and the CCTV camera 120 are positioned, for example by aligning their respective field of view, to capture data of the road scene in order to detect hazardous objects on the road.

Hazardous objects are any stationary or slow-moving objects on the road which block the road and/or pose a risk of collision by other vehicles. For example, hazardous objects may include stopped or stationary vehicles, pedestrians, animals, or obstacles such as fallen debris, tyres and construction materials.

Data representing the road scene is captured using the LiDAR sensor 110 and the CCTV camera 120, in the form of point cloud data and visual data respectively.

The LiDAR sensor 110 uses laser light pulses to capture (step 710) three-dimensional point cloud data within its field of view in a manner known *per se* in the art. Each point in the point cloud directly corresponds to a position with a three-dimensional coordinate in the road scene. The LiDAR sensor 110 then generates (step 720) a three-dimensional point cloud based on the captured data, by recording the positional co-ordinates of the reflected laser pulses. This three-dimensional point cloud will represent the road scene within the field of view of the LiDAR sensor 110.

The CCTV camera 120 captures (step 730) visual data in the form of images and/or video footage. In normal operation this visual data is simply transmitted by the communication module 140 to the remote monitoring station for monitoring by an operator and/or recording. However, as explained further below, if a hazardous object is detected this is highlighted in the visual data transmitted.

The LiDAR sensor 110 precisely captures data representing the road scene, including data which may be obscured or distorted for the CCTV camera 120.

Figure 4A shows a conventional image of a section of a road containing various vehicles and traffic cones defining a work zone. The image has been captured using a camera such as CCTV camera 120. Sections of the image are partially occluded and/or distorted due to the presence of water droplets on the camera lens.

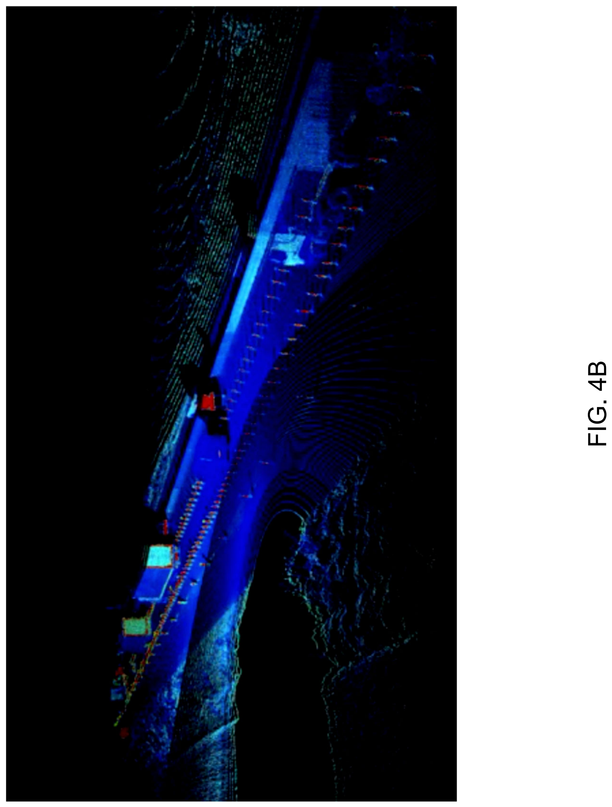

Figure 4B shows a point cloud data representation of the same section of the road as in Figure 4A, captured using a LiDAR sensor. Due to the LiDAR sensor capturing the road scene using reflected laser pulses rather, the point cloud data representation is not subject to visual obstruction or distortion as may be present on a camera lens which can be seen in Figure 4A.

The processing module 130 receives the captured point cloud data and the captured visual data from the LiDAR sensor 110 and the CCTV camera 120 respectively. The processing module 130 is able to interpret the point cloud data and identify (step 740) all objects on the road using the point cloud data.

The processing module 130 interprets the point cloud data by determining, for a point or collection of points, relevant information such as a distance to the LiDAR sensor, a speed or a size. Based on this information, all objects on the road are identified and a corresponding subset of points within the point cloud is associated with each object. This subset of points is assigned to a unique identification for each object. Each unique identification includes a unique label and list of three-dimensional position co-ordinates, which is then mapped to corresponding pixels in the visual data. The processing module 130 achieves this mapping by interpreting the visual data to identify matching position co-ordinates between the visual data and the point cloud data.

It may be possible immediately to identify an object as hazardous (step 750) from those previously identified and labelled - e.g. because of its size or shape. However the processing module 130 also tracks and classifies each identified object over time, using data from three-dimensional point clouds captured at consecutive points in time. The unique identification label of each object is used to provide continuous tracking of each object's motion, such as object position and speed. This provides the ability to The processing module 130 then classifies tracked objects, for example based on object motion, location or any other suitable attribute. The classification of each tracked object can be used to identify objects which are not moving - e.g. vehicles which are not moving as they should or foreign stationary objects - as hazardous objects. The classification can also assist in suggesting further action (e.g. notifying on-site workers, recovery teams and/or emergency services), or to generate high-priority alerts.

Based on the classification of each tracked object, the processing module 130 thus identifies hazardous objects on the road. For example, a hazardous object may be a tracked object which has been classified as stationary and blocking a highway lane. Using the unique identifications of each hazardous object, a representation of the object is mapped (step 760) onto the visual data received from the camera. The mapped representations can then be transmitted to an external system and displayed on a display output for monitoring by an operator.

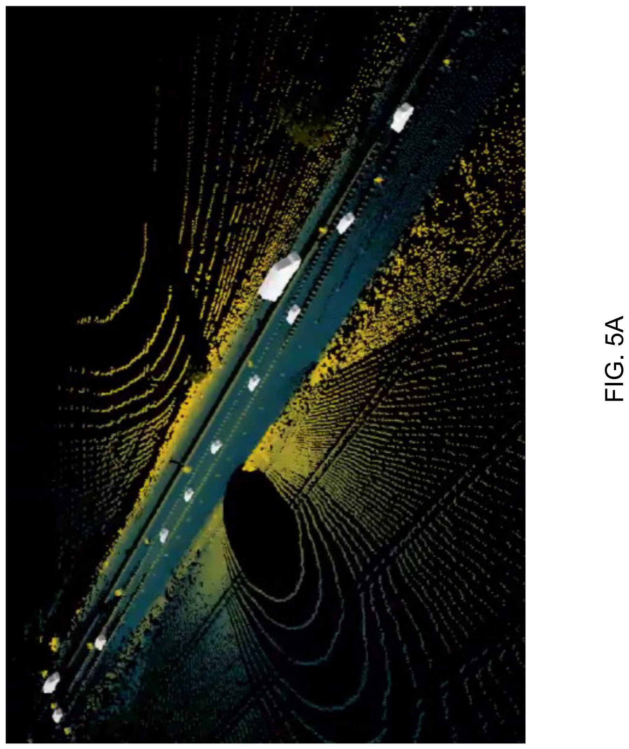

Figure 5A shows point cloud data of a section of the road captured using the LiDAR sensor **110.** The point cloud data has not been processed and objects have not been identified.

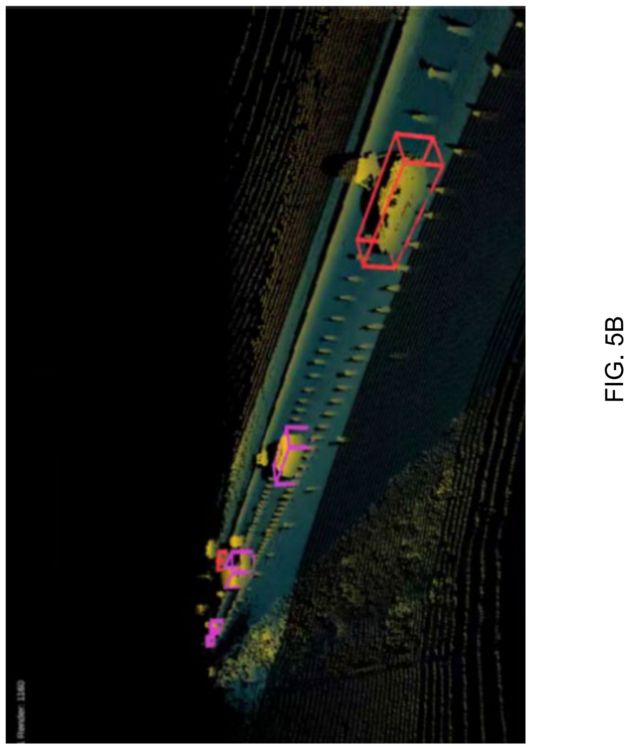

Figure 5B shows the same section of the road as in Figure 5A. The processing module 130 has processed the raw point cloud data and all identified objects are displayed in bounding boxes. The identified objects are tracked over time, based on multiple three-dimensional point clouds captured at consecutive points in time.

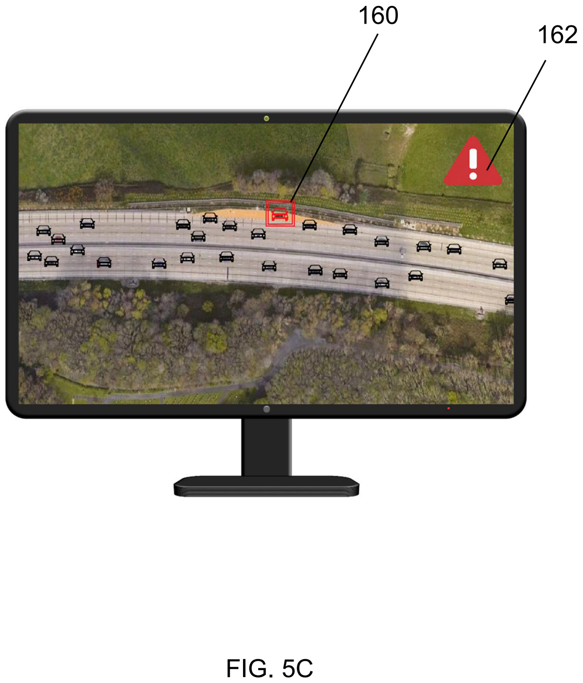

Once hazardous objects have been identified in the point cloud data and mapped to the visual data from the camera, this is sent by the communication module 140 to the remote monitoring station. As shown in Figure 5C, the mapped objects are displayed on the operator's screen with a highlighted box 160 and an alert icon 162. The mapped objects and the alert icon may be further visually highlighted, such as by being provided in a bright colour and being made to flash. Similarly, an audible alert may be generated. This allows the operator to verify the hazard and take suitable remedial action such as alerting emergency roadside notifications and alerting emergency services.

As well as communicating the mapped objects to the remote monitoring station, the processing module 130 may control the camera 120 to direct it towards the object (if it determines that the object is not fully in the camera's current field of view) and/or zoom in on the object.

In other embodiments (not shown) the processing module which generates identification of hazardous objects and/or mapping to the visual data may be remote from the tower station 100. For example, the processing module may be implemented across multiple computers, in a remote data processing centre, in an external computer or as a cloud service.

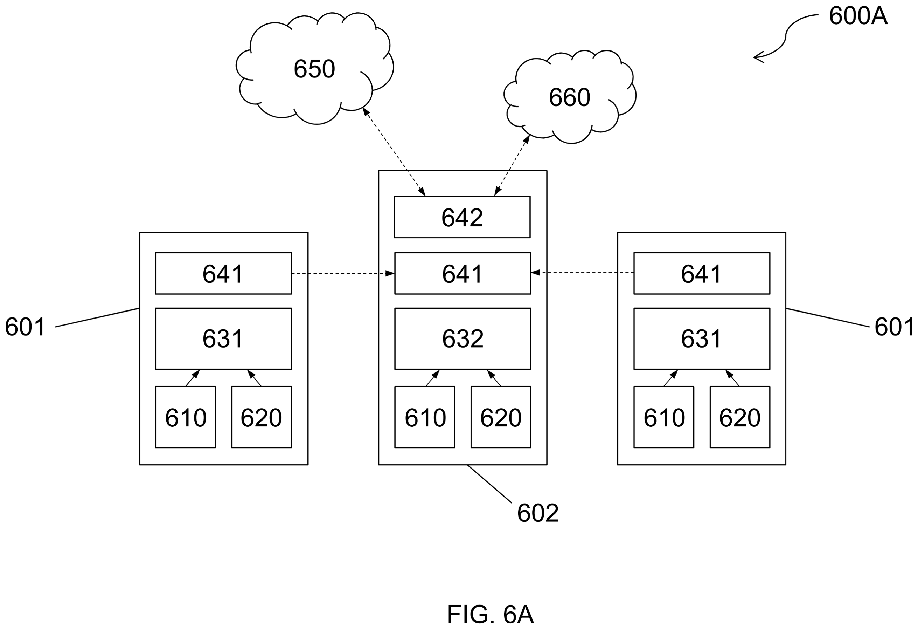

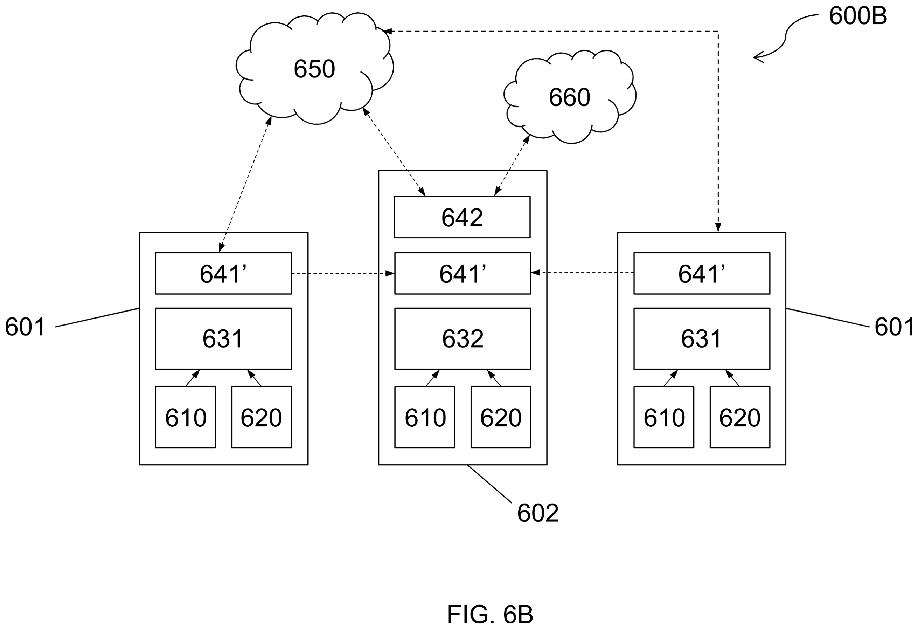

Figures 6A and 6B each show a respective schematic diagram of a network 600A, 600B of multiple tower stations according to two further embodiments. Figure 6A relates to a first configuration of the network 600A, and Figure 6B relates to a second configuration of the network 600B.

The network 600A, 600B includes multiple node tower stations 601, a single master tower station 602, a monitoring station 660 and an alert receiving centre 660. Although Figures 6A and 6B show the network 600A, 600B having two node tower stations 601, the skilled person will appreciate that any number of node tower stations 601 may be applicable.

Each of the node tower stations 601 and the master tower station 602 includes a LiDAR sensor 610 and an image capture device 620. Each LiDAR sensor 610 may be the same as the LiDAR sensor 110 of the tower station 100, and each image capture device 620 may be the same as the CCTV camera 120 of the tower station 100.

Node tower stations 601 each further include a node processing module 631, and the master tower station 602 further includes a master processing module 632.

With reference to Figure 6A, in a first configuration of the network 600A, the node processing modules 631 are computers which store and execute software code in order to detect, track and classify objects for each point cloud captured by the respective LiDAR sensor 610, as described with reference to the processing module 130 of the tower station 100. The master processing module 632 is a computer which receives each set of data relating to the detected, tracked and classified objects, as well as alerts relating to the hazardous objects, from the node processing modules 631.

In the first configuration of the network 600A, node tower stations 601 and the master tower station 602 each further include an inter-node communication module 641, which is a device that establishes a point-to-point wireless link with an adjacent node tower station 601 or the master tower station 602. The master tower station 602 further includes a master communication module 642, which is a router.

The inter-node communication modules 641 communicationally link each node tower station 601 with an adjacent node tower station 601, or with the master tower station 602. The master communication module 642 communicationally links the master tower station 602 with the monitoring station 650. The master tower station is additionally communicationally linked with the alarm receiving centre 660 via the master communication module 642. The communicational links are all established wirelessly and use radio communication via Wi-Fi or a 4G/5G network, but the communicational links may be wired, e.g. using underground or overhead cables.

First, three-dimensional point cloud data and visual data are collected at each of the node tower stations 601 using each respective LiDAR sensor 610 and image capture device 620. The node processing modules 631 then execute software code in order to detect, track and classify objects for each point cloud. Each inter-node communication module 641 then sends data relating to the detected, tracked and classified objects, as well as alerts relating to the hazardous objects, to the master communication module 642. When a node tower station 601 is not close enough to the master tower station 602, the data from that node may be sent to the master tower 602 via sequential connection through one or more adjacent inter-node communication modules 641.

The master processing module 632 then receives the data from its inter-node communication module 641 and executes software code which combines and integrates the received data from each of the node tower stations 601 to create a continuous, single instance view of the road scene which is covered by the network 600A. This unified view of the road scene includes the consolidated data relating to the detected, tracked and classified objects. The master processing module 632 accurately combines the received data by synchronising timestamp data and aligning position coordinates for common reference points, between the sets of data captured at each node tower station 601.

The master processing module 632 then instructs the master communication module 642 to send data to the monitoring station 650 for display on a display output, which is monitored by an operator located in the monitoring station 650. The data includes a list of unique identifications (e.g. three-dimensional position co-ordinates) corresponding to a subset of points within the point cloud associated with each object, a list of corresponding pixels in the visual data, and a list of alerts relating to the hazardous objects.

If appropriate, for example if the identified objects are identified as high-priority hazards, the master processing module 632 may instruct the master communication module 642 to send an alert to the alert receiving centre 660 in order for further action to be taken (e.g. notifying on-site workers, recovery teams and/or emergency services).

With reference to Figure 6B, in a second possible configuration of the network 600B, the node processing modules 631 are computers which do not detect, track and classify objects at each node tower station 601, but merely process the raw point cloud data for communication to the master processing module 632. The master processing module 632 is a computer which receives and combines the raw point cloud data from each of the node processing modules 631 of the node tower stations 601. The master processing module then detects, tracks and classifies objects within the combined point cloud data, as described with reference to the processing module 130 of the tower station 100.

In the second configuration of the network 600B, node tower stations 601 and the master tower station 602 each further include a node communication module 641', and the master tower station 602 further includes a master communication module 642, which is a router. The node communication modules 641' are functionally equivalent to the node communication modules 641, but each additionally include a router that establishes a direct communication link with the monitoring station 650. This allows the raw point cloud data to also be transmitted to the monitoring station 650 for external processing, which enables verification of the consolidated data sent to the monitoring station 650 from the master communication module 642.

It will be appreciated by those skilled in the art that the invention has been illustrated by describing one or more specific embodiments thereof, but is not limited to these embodiments; many variations and modifications are possible, within the scope of the accompanying claims.

## Claims

1. A system for detecting the presence of a hazardous object on a road, the system comprising:
a detection and ranging sensor, arranged to capture data from the road and generate a three-dimensional point cloud, based on the captured data;
an image capture device arranged to capture visual data from the road;
a processing module configured to:
generate an identification of at least one hazardous object within the three-dimensional point cloud, the identification comprising a subset of points within the three-dimensional point cloud; and
map the subset of points in the three-dimensional point cloud to corresponding parts of the visual data.

2. The system as claimed in claim 1, wherein the signals comprise pulses of laser light, and the sensor comprises a LiDAR sensor.

3. The system as claimed in claim 2, wherein LiDAR sensor is mounted to a support structure at the roadside and is arranged to capture data by rotating about its axis, optionally wherein the sensor is arranged to rotate at angle of between 15 and 20 degrees below the horizontal.

4. The system as claimed in any preceding claim, wherein the processing module is arranged to map the subset of points to the visual data by selecting a portion of visual data to be displayed, and/or wherein the processing module is arranged to display the corresponding parts of the visual data as a visual highlight representing the hazardous object.

5. The system as claimed in any preceding claim, wherein the processing module is arranged to adjust a field of view of the image capture device to ensure that it captures, or captures more comprehensively, visual data associated with the identified hazardous object.

6. The system as claimed in any preceding claim, wherein the processing module is arranged to generate an alert when a hazardous object is identified and/or wherein the processing module is arranged to send an instruction to a variable message sign to alert drivers on the road.

7. The system as claimed in any preceding claim, wherein the processing module is arranged to identify all objects within the three-dimensional point cloud in order to generate an identification of the at least one hazardous object, optionally wherein the processing module is arranged to classify all identified objects.

8. The system as claimed in claim 7, wherein the processing module is arranged to track objects within the three-dimensional point cloud using one or more identifications, optionally wherein the tracking is used to identify hazardous objects.

9. The system as claimed in any preceding claim, comprising an air quality sensor arranged to detect and measure pollutant levels in the surrounding environment and/or a weather sensor arranged to measure the atmospheric conditions of the surrounding environment.

10. The system as claimed in any preceding claim, comprising a roadside station optionally wherein the roadside station comprises a mounting pole onto which the detection and ranging sensor and the image capture device are mounted, and a base.

11. The system as claimed in any preceding claim, comprising a plurality of detection and ranging sensors and/or image capture devices, optionally comprising a plurality of roadside stations wherein each roadside station comprises a detection and ranging sensor and/or an image capture device.

12. The system as claimed in claim 11, wherein the plurality of roadside stations are arranged in a network, optionally wherein the network comprises a master station and at least one node station.

13. The system as claimed in any preceding claim, wherein the identification comprises co-ordinate information of ach point forming the identified hazardous object, optionally wherein the co-ordinate information comprises X, Y and Z position values which represent each point in the three-dimensional space of the road scene.

14. The system as claimed in any preceding claim, wherein the processing module is arranged to map the identification of the hazardous object using at least one of associating, matching, correlating and aligning position values of each point with the corresponding parts of the visual data.

15. A method for detecting the presence of a hazardous object on a road, the method comprising:
capturing data from the road;
generating a three-dimensional point cloud, based on the captured data;
capturing visual data from the road;
generating an identification of at least one hazardous object within the three-dimensional point cloud, the identification comprising a subset of points within the three-dimensional point cloud; and
mapping the subset of points in the three-dimensional point cloud to corresponding parts of the visual data.
